# EUROPEAN PATENT APPLICATION

(11) **EP 4 661 466 A1**
(43) Date of publication of application: **10.12.2025**
(21) Application number: 23919014.3
(22) Date of filing: 31.01.2023
(51) Int. Cl.: H04W 24/02

(54) **METHOD AND APPARATUS FOR UPDATING TRANSMIT AND RECEIVE POINT (TRP)**

(71) Applicant: Beijing Xiaomi Mobile Software Co., Ltd., Beijing 100085 (CN)
(72) Inventor: DUAN, Gaoming, Beijing 100085 (CN); CHI, Liangang, Beijing 100085 (CN)
(74) Representative: Gunzelmann, Rainer
(86) International application number: PCT/CN2023/074051
(87) International publication number: WO 2024/159434

(57) **Abstract**

The present disclosure relates to the technical field of communications. Provided are a method and apparatus for updating a transmit and receive point (TRP). The method for updating a transmit and receive point (TRP) provided in the embodiments of the present disclosure comprises: a network-side device sending configuration information and a reference signal to a terminal device, wherein the configuration information is used for the terminal device to measure the reference signal, so as to acquire a channel measurement result; and the network-side device determining, according to the channel measurement result sent by the terminal device, whether to update a transmit and receive point (TRP) cluster and a TRP set, which correspond to the terminal device. The present disclosure can solve the problems in existing multi-node cooperative network architectures of the communication quality of an edge user being poor, and it being necessary to frequently perform cell handover.

## Description

### TECHNICAL FIELD

The disclosure relates to a field of communication technology, and in particular to a method and an apparatus for updating a transmission reception point (TRP).

### BACKGROUND

With the continuous development of wireless communication, requirements for communication capability are increasing. For future application scenarios such as augmented reality (AR), virtual reality (VR), vehicle-to-everything, and Internet of Things, ultra-high speed, ultra-low latency and ultra-large bandwidth communication has become the norm. To meet the requirements, more and more new technologies have been proposed. Multiple input multiple output (MIMO) technology has ushered in a new era of spatial resource utilization in a mobile communication system. MIMO brings a network device closer to a terminal. In terms of structure, no matter where the terminal moves, there will always be some transmission reception points (or transmit and receive points, TRPs) nearby to serve it. Therefore, a multi-node cooperative transmission network architecture is needed to serve the terminal.

However, a traditional multi-node cooperative network architecture (such as cellular cell architecture) is only applied to a transmission stage of service data and has not been optimized for robustness of an access stage and a switching process. If the terminal wants to obtain distributed cooperative transmission, the terminal needs to first access/switch to a network and then perform a cooperative transmission on a service channel. This makes it difficult to guarantee consistent user experience for an edge user, resulting in poor communication quality and frequent cell handover.

### SUMMARY

The disclosure provides methods and apparatuses for updating a transmission reception point (TRP), which may solve problems of poor communication quality for an edge user and frequent cell handover in an existing multi-node cooperative network architecture.

According to a first aspect of the embodiments of the disclosure, there is provided a method for updating a TRP, performed by a network device. The method includes sending configuration information and a reference signal to a terminal, in which the configuration information is used for the terminal to obtain a channel measurement result by measuring the reference signal; and determining whether to update a TRP cluster and a TRP set corresponding to the terminal based on the channel measurement result sent by the terminal.

In some embodiments of the disclosure, before sending the configuration information to the terminal, the method further includes at least one of: determining the TRP set corresponding to the terminal, in which the TRP set includes a first TRP set and a second TRP set, the first TRP set includes one or more TRPs in a serving TRP cluster, the serving TRP cluster is a TRP cluster currently providing a connection service to the terminal, the second TRP set includes one or more TRPs in a measurement TRP cluster, and the measurement TRP cluster is a TRP cluster adjacent to the serving TRP cluster; or determining configuration information of the TRP set corresponding to the terminal, in which the configuration information includes first configuration information and second configuration information, the first configuration information is used for the terminal to measure a first reference signal of the first TRP set, and the second configuration information is used for the terminal to measure a second reference signal of the second TRP set.

In some embodiments of the disclosure, the first configuration information includes at least one of: quasi co-location (QCL) information of the first reference signal, in which the QCL information includes one or more QCL relationships; first measurement information for the first reference signal, in which the first measurement information includes a reference signal type, a resource configuration and a measured parameter; or a reporting configuration for the first reference signal, in which the reporting configuration includes any one of periodic reporting, semi-periodic reporting or aperiodic reporting.

In some embodiments of the disclosure, the second configuration information includes at least one of: a measurement TRP cluster identity document (ID) to which a second TRP in the second TRP set belongs; QCL information of the second reference signal, in which the QCL information includes one or more QCL relationships; second measurement information for the second reference signal, in which the second measurement information includes a frequency point, a reference signal type, a resource configuration and a measured parameter; or a reporting configuration for the second reference signal, in which the reporting configuration includes any one of periodic reporting, semi-periodic reporting or aperiodic reporting.

In some embodiments of the disclosure, sending the configuration information and the reference signal to the terminal includes sending the first configuration information and the second configuration information to the terminal; and sending the first reference signal and the second reference signal to the terminal.

In some embodiments of the disclosure, the configuration information further includes a reporting configuration of the channel measurement result, the channel measurement result includes a first channel measurement result and a second channel measurement result, and the method further includes: receiving the first channel measurement result and the second channel measurement result, sent by the terminal based on the reporting configuration, in which the first channel measurement result is obtained by measuring, by the terminal, the first reference signal based on the first configuration information, and the second channel measurement result is obtained by measuring, by the terminal, the second reference signal based on the second configuration information.

In some embodiments of the disclosure, determining whether to update the TRP cluster and the TRP set corresponding to the terminal based on the channel measurement result sent by the terminal includes: determining whether TRP(s) in the first TRP set satisfies/satisfy a data transmission condition of the terminal based on the first channel measurement result; in response to the TRP(s) in the first TRP set not satisfying the data transmission condition, not updating the serving TRP cluster, and updating the first TRP set using TRP(s) in the serving TRP cluster; and/or in response to the TRP(s) in the first TRP set not satisfying the data transmission condition, updating the serving TRP cluster and the first TRP set using TRP(s) in the measurement TRP cluster based on the second channel measurement result, and updating the measurement TRP cluster and the second TRP set based on an updated serving TRP cluster.

In some embodiments of the disclosure, in response to the TRP(s) in the first TRP set not satisfying the data transmission condition, the method further includes: sending updated configuration information to the terminal, in which the updated configuration information includes at least one of: a serving TRP cluster ID corresponding to the first TRP set; a measurement TRP cluster ID corresponding to the second TRP set; first configuration information of the first TRP set; or second configuration information of the second TRP set.

In some embodiments of the disclosure, determining whether to update the TRP cluster and the TRP set corresponding to the terminal based on the channel measurement result sent by the terminal includes: in response to the TRP(s) in the first TRP set satisfying the data transmission requirement of the terminal, not updating the serving TRP cluster, the measurement TRP cluster, the first TRP set, and the second TRP set.

According to a second aspect of the embodiments of the disclosure, there is provided a method for updating a TRP, performed by a terminal. The method includes: receiving configuration information and a reference signal sent by a network device; obtaining a channel measurement result by measuring the reference signal based on the configuration information; and sending the channel measurement result to the network device to enable the network device to determine, based on the channel measurement result, whether to update a TRP cluster and a TRP set corresponding to the terminal.

In some embodiments of the disclosure, the configuration information includes first configuration information and second configuration information, in which receiving the configuration information sent by the network device includes: receiving first configuration information of the first TRP set sent by the network device, in which the first TRP set includes one or more TRPs in a serving TRP cluster, the serving TRP cluster is a TRP cluster currently providing a connection service to the terminal, the first configuration information is used for performing first reference signal measurement and reporting a first channel measurement result; and receiving second configuration information of the second TRP set sent by the network device, in which the second TRP set includes one or more TRPs in a measurement TRP cluster, the measurement TRP cluster is a TRP cluster adjacent to the serving TRP cluster, and the second configuration information is used for performing second reference signal measurement and reporting a second channel measurement result.

In some embodiments of the disclosure, the first configuration information includes at least one of: QCL information of the first reference signal, in which the QCL information includes one or more QCL relationships; first measurement information for the first reference signal, in which the first measurement information includes a reference signal type, a resource configuration and a measured parameter; or a reporting configuration for the first reference signal, in which the reporting configuration includes any one of periodic reporting, semi-periodic reporting or aperiodic reporting.

In some embodiments of the disclosure, the second configuration information includes at least one of: a measurement TRP cluster ID to which a second TRP in the second TRP set belongs; QCL information of the second reference signal, in which the QCL information includes one or more QCL relationships; second measurement information for the second reference signal, in which the second measurement information includes a frequency point, a reference signal type, a resource configuration and a measured parameter; or a reporting configuration for the second reference signal, in which the reporting configuration includes any one of periodic reporting, semi-periodic reporting or aperiodic reporting.

In some embodiments of the disclosure, receiving the reference signal sent by the network device includes receiving the first reference signal and the second reference signal sent by the network device.

In some embodiments of the disclosure, obtaining the channel measurement result by measuring the reference signal based on the configuration information includes obtaining a first channel measurement result by measuring the first reference signal based on the first measurement configuration information; and obtaining a second channel measurement result by measuring the second reference signal based on the second measurement configuration information.

In some embodiments of the disclosure, sending the channel measurement result to the network device includes sending the first channel measurement result and the second channel measurement result to the network device.

In some embodiments of the disclosure, the method further includes: receiving updated configuration information sent by the network device, in which the updated configuration information includes at least one of: a serving TRP cluster ID corresponding to the first TRP set; a measurement TRP cluster ID corresponding to the second TRP set; first configuration information of the first TRP set; or second configuration information of the second TRP set.

According to a third aspect of the embodiments of the disclosure, there is provided an apparatus for updating a TRP, applied to a network device. The apparatus includes a sending module, configured to send configuration information to a terminal, in which the configuration information is used for the terminal to perform reference signal measurement and to report a channel measurement result; in which the sending module is further configured to send a reference signal to a terminal, in which the reference signal is used for the terminal to perform channel measurement; and a processing module, configured to determine whether to update a TRP cluster and a TRP set corresponding to the terminal based on the channel measurement result sent by the terminal.

According to a fourth aspect of the embodiments of the disclosure, there is provided an apparatus for updating a TRP, applied to a terminal. The apparatus includes a receiving module, configured to receive configuration information sent by a network device, in which the configuration information is used for the terminal to perform reference signal measurement and report a channel measurement result; in which the receiving module is further configured to receive a reference signal sent by a network device, in which the reference signal is used for the terminal to perform channel measurement; a processing module, configured to obtain a channel measurement result by measuring the reference signal based on the configuration information; and a sending module, configured to send the channel measurement result to the network device to enable the network device to determine, based on the channel measurement result, whether to update a TRP cluster and a TRP set corresponding to the terminal.

According to a fifth aspect of the embodiments of the disclosure, there is provided a communication device. The communication device includes a transceiver, a memory, and a processor connected to the transceiver and the memory and configured to control wireless signal transmission and reception of the transceiver by executing computer-executable instructions on the memory and to implement the method in the first aspect or the second aspect of the disclosure.

According to a sixth aspect of the embodiments of the disclosure, there is provided a computer storage medium having computer-executable instructions stored thereon. When the computer-executable instructions are executed by a processor, the method in the first aspect or the second aspect of the disclosure is implemented.

According to a seventh aspect of the embodiments of the disclosure, there is provided a communication system. The communication system includes a network device and a terminal, in which the network device is configured to implement the method in the first aspect of the disclosure; and the terminal is configured to implement the method in the second aspect of the disclosure.

With the methods and the apparatuses for updating a TRP according to the embodiments of the disclosure, the network device may send the configuration information and the reference signal to the terminal, such that the terminal obtains the channel measurement result by measuring the reference signal based on the configuration information. The network device may update the TRP cluster and the TRP set corresponding to the terminal based on the channel measurement result sent by the terminal, such that the TRP cluster and the TRP set configured for the terminal may be updated as the terminal moves and a channel condition changes. In a distributed transmission process where there is no need for the terminal to perform a cell handover, the TRP cluster corresponding to the terminal is updated via the network device, and the terminal is served by a plurality of TRPs in the TRP cluster, which may ensure a communication quality for an edge user and may meet service requirements of the terminal for the high speed and the high capacity.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

The above and/or other aspects and advantages of embodiments of the disclosure will become apparent and more readily appreciated from the following descriptions made with reference to the accompanying drawings.
FIG. 1 is a flowchart illustrating a method for updating a transmission reception point (TRP) according to the embodiments of the disclosure.
FIG. 2 is a schematic diagram illustrating an architecture of a user-centric network according to the embodiments of the disclosure.
FIG. 3 is a flowchart illustrating a method for updating a TRP according to the embodiments of the disclosure.
FIG. 4 is a flowchart illustrating a method for updating a TRP according to the embodiments of the disclosure.
FIG. 5 is a flowchart illustrating a method for updating a TRP according to the embodiments of the disclosure.
FIG. 6 is a flowchart illustrating a method for updating a TRP according to the embodiments of the disclosure.
FIG. 7 is a flowchart illustrating a method for updating a TRP according to the embodiments of the disclosure.
FIG. 8 is a flowchart illustrating a method for updating a TRP according to the embodiments of the disclosure.
FIG. 9 is a timing diagram of a method for updating a TRP according to the embodiments of the disclosure.
FIG. 10 is a block diagram illustrating an apparatus for updating a TRP according to the embodiments of the disclosure.
FIG. 11 is a block diagram illustrating an apparatus for updating a TRP according to the embodiments of the disclosure.
FIG. 12 is a block diagram illustrating a communication device according to the embodiments of the disclosure.
FIG. 13 is a block diagram illustrating a chip according to the embodiments of the disclosure.

### DETAILED DESCRIPTION

Description will be made in detail below of embodiments of the disclosure. Examples of embodiments are illustrated in the accompanying drawings, in which, the same or similar numbers represent the same or similar elements or elements with the same or similar functions. Embodiments described below with reference to the accompanying drawings are exemplary, which are intended to explain the disclosure and should not be understood as a limitation of the disclosure.

With the continuous development of wireless communication, requirements for the communication capability are getting higher and higher. For future application scenarios such as augmented reality (AR), virtual reality (VR), vehicle-to-everything, and Internet of Things, ultra-high speed, ultra-low latency, and ultra-large bandwidth communication has become the norm. To meet the requirements, more and more new technologies have been proposed. Multiple-input multiple-output (MIMO) technology has ushered in a new era of spatial resource utilization in a mobile communication system. Distributed MIMO may not only be applied to a single-cell cellular base station system but also further replace a multi-cell cellular base station. A non-cellular mobile communication system is formed in the form of a distributed multiuser MIMO (MU-MIMO), which is called cell-free technology. The cell-free technology may provide the service to all users on the same time/frequency resources without a traditional frequency division between cells, and the system resources may be dynamically scheduled comprehensively, which may improve the flexibility of resource allocation in an existing system and significantly increase a utilization rate of the resource. For user equipment (UE), the distributed MIMO technology means that there will be a plurality of base stations serving the UE simultaneously, without cell handover. Without a concept of cell boundary, user experience will be smoother. Since multiple transmission reception points (TRPs) serve one terminal, the signal quality is better guaranteed, and service requirements of the terminal for such as high speed and high capacity may be met.

In distributed ultra-large-scale MIMO, the network device is close to the terminal. In terms of structure, no matter where the terminal moves, there will always be some TRPs nearby to serve the terminal, truly realizing a user-centered network structure. Therefore, a network protocol and a network architecture design above the physical layer also need to be matched. A network architecture with multi-node cooperative transmission is needed to serve the terminal.

However, the traditional multi-node cooperative network architecture (such as cellular cell architecture) is only applied to a data transmission stage and has not optimized the robustness of an access stage and a handover process. To obtain a distributed cooperative transmission, the terminal needs to first access/switch to the network and then perform the cooperative transmission on a service channel. This makes it difficult to guarantee consistent user experience for an edge user, resulting in poor communication quality and frequent cell handover.

Therefore, the disclosure provides methods and apparatuses for updating a TRP. A distributed TRP networking solution centered on the user is proposed. By configuring a unique TRP cluster for the UE, the TRP cluster may be updated as the user moves and the channel condition changes, which may solve problems of poor communication quality for an edge user and frequent cell handover in the existing multi-node cooperative network architecture.

With reference to accompanying drawings, the methods and the apparatuses for updating a TRP according to the disclosure will be described in detail below.

Example embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following example embodiments do not represent all implementations consistent with the disclosure. Instead, they are merely examples of apparatuses and methods consistent with some aspects of the disclosure as detailed in the appended claims.

The term employed in the disclosure is merely for the purpose of describing a detailed embodiment and is not intended to limit the disclosure. As used in the disclosure and the appended claims, a singular form "a" or "the" is also intended to include plural forms, unless the context clearly indicates other meaning. It may also be understood that the term "and/or" as used herein refers to including any or all possible combinations of one or more associated listed items.

It may be understood that, although terms "first, second, third and the like" may be employed in the disclosure to describe various kinds of information, the information should not be limited to these terms. These terms are merely used to distinguish the same type of information from each other. For example, without departing from a scope of the disclosure, "first information" may also be called "second information", and similarly, the "second information" may also be called "first information " . Depending on the context, the word "if" as used herein may be interpreted as "when" or "in a case that..." or "in response to determining".

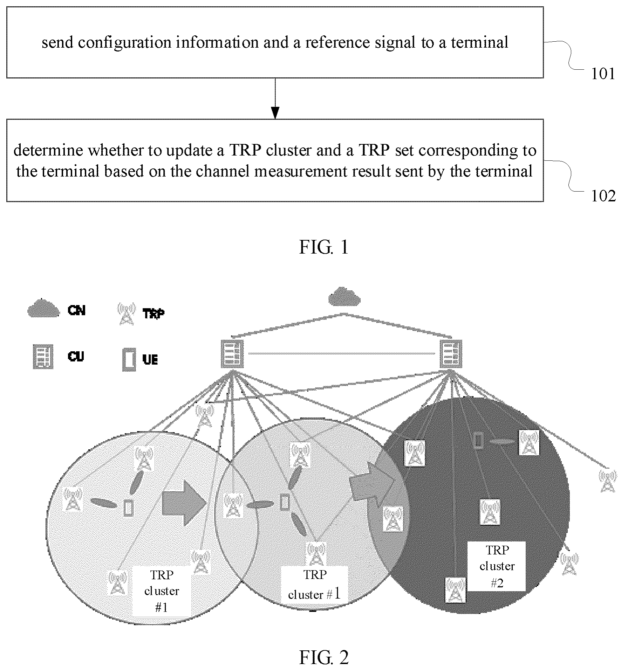

FIG. 1 is a flowchart illustrating a method for updating a TRP according to the embodiments of the disclosure. As illustrated in FIG. 1, the method is performed by a network device. As illustrated in FIG. 2, the network device may include TRP clusters, centralized units (CUs), and a central network (CN). The TRP cluster is a set of TRPs configured by a network side for the UE and is unique to the UE. Some or all of the TRPs included in the TRP cluster are used for transmitting data to the UE or receiving data from the UE. A CU generally connects to the TRPs via optical fibers, aggregates information of each TRP to a central controller and performs coordinated scheduling on wireless resources. Different CUs exchange information via the optical fiber or a core network. The method for updating a TRP may include the following.

At step 101, configuration information and reference signal(s) are sent to a terminal.

The configuration information may include measurement parameters for the terminal to perform reference signal measurement(s) and reporting configuration(s) for the terminal to report channel measurement result(s). The measurement parameters may include a transmission quantity of reference signals, a transmission resource, a frequency point, and a measured parameter. The reporting configuration may include any one of periodic reporting, semi-periodic reporting or aperiodic reporting. The network device may send the configuration information and the reference signal(s) to the terminal, such that the terminal may measure the reference signal(s) based on the measurement parameters in the configuration information to obtain the channel measurement result(s). After obtaining the channel measurement result(s), the terminal may report the channel measurement result(s) obtained by the measurement based on the reporting configuration(s) in the configuration information. The channel measurement result reflects data transmission quality of a TRP cluster and a TRP set corresponding to the terminal, that is, the channel quality.

It needs to be noted that the network device may send the configuration information and the reference signal(s) to the terminal simultaneously or the network device may send the configuration information to the terminal first and then send the reference signal(s). In the disclosure, the sequence of sending the configuration information and the reference signal(s) is not limited herein.

At step 102, it is determined whether to update a TRP cluster and a TRP set corresponding to the terminal based on the channel measurement result(s) sent by the terminal.

The TRP cluster corresponding to the terminal may include a serving TRP cluster and a measurement TRP cluster. The TRP set may include a first TRP set and a second TRP set. The serving TRP cluster is a TRP cluster currently providing a connection service to the terminal. The measurement TRP cluster is a TRP cluster adjacent to the serving TRP cluster. The first TRP set is a subset of the serving TRP cluster and may include all or some of TRPs in the serving TRP cluster. The second TRP set is a subset of the measurement TRP cluster and may include all or some of TRPs in one or more measurement TRP clusters. TRPs in one TRP cluster use the same set of system information, which realizes distributed collaborative transmission for the terminal.

In the disclosure, it may be determined whether the first TRP set may provide a data transmission service for the terminal based on the channel measurement result(s). In the case that the first TRP set cannot provide the data transmission service for the terminal, the first TRP set may be updated using the current serving TRP cluster. In the case that the first TRP set includes all TRPs of the current serving TRP cluster, it indicates that the current serving TRP cluster also cannot provide the data transmission service for the terminal. When neither the current serving TRP cluster nor the first TRP set may provide the data transmission service to the terminal, the measurement TRP cluster and the second TRP set may be used to assist in updating the serving TRP cluster and the first TRP set. For example, the network device may replace TRP(s) in the serving TRP cluster and the first TRP set with TRP(s) in the measurement TRP cluster having a stronger signal transmission capability for the terminal based on the channel measurement result(s) and continue to provide the data transmission service to the terminal using the replaced TRP(s).

In a specific application scenario, as illustrated in FIG. 2, for each UE, the network device may configure a unique TRP cluster for the UE. TRP(s) for transmitting data for the UE may be selected from the TRP cluster. As a user moves and a channel condition changes, the number of TRPs in the TRP cluster may change, and a TRP cluster to which the UE belongs may also change. In a network architecture corresponding to FIG. 2, one TRP may be connected to a plurality of CUs. In the embodiments of the disclosure, by analyzing the channel measurement result(s) obtained through the measurement performed by the terminal based on the configuration information, it is determined whether the first TRP set has better data transmission quality for the terminal in the current mobility state and the current channel condition. In a case of determining that TRP(s) in the first TRP set has/have a poor transmission state for the terminal and may not meet a data transmission condition of the terminal, the first TRP set needs to be updated, or the current serving TRP cluster may be updated to ensure the data transmission quality of the terminal. In addition, after the serving TRP cluster is updated, the measurement TRP cluster and the second TRP set may be further updated based on the updated serving TRP cluster, such that the updated measurement TRP cluster and the updates second TRP set may assist in a subsequent update of the serving TRP cluster and the first TRP set. The data transmission condition may be a condition that the TRP(s) in the first TRP set satisfies/satisfy the maximization of channel capacity or the maximization of resource utilization or a condition that the receiving quality of the terminal with respect to the reference signal for the TRP(s) of the first TRP set is less than a preset threshold, etc. The data transmission condition is not limited herein.

In conclusion, with the method for updating a TRP according to the disclosure, the network device may send the configuration information and the reference signal(s) to the terminal, such that the terminal may perform the reference signal measurement(s) based on the configuration information to obtain the channel measurement result(s). The network device may update the TRP cluster and the TRP set corresponding to the terminal based on the channel measurement result(s) sent by the terminal, such that the TRP cluster and the TRP set configured for the terminal may be updated as the terminal moves and the channel condition changes. In a distributed transmission process where there is no cell handover, the network device updates the TRP cluster corresponding to the terminal and the TRPs in the updated TRP cluster are used to serve the terminal, thereby ensuring the communication quality for an edge user and meeting service requirements of the terminal for, such as, high speed and high capacity.

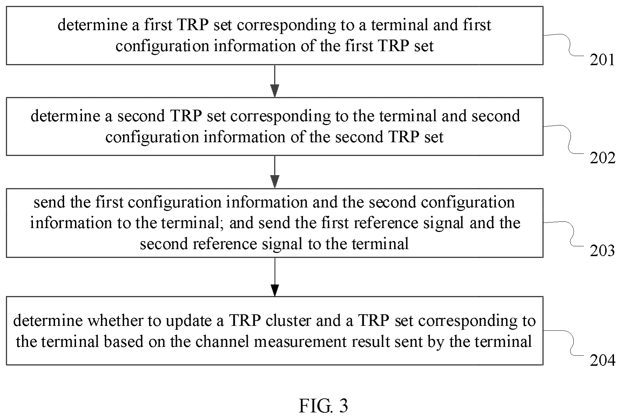

FIG. 3 is a flowchart illustrating a method for updating a TRP according to the embodiments of the disclosure. The method is performed by a network device. Based on embodiments illustrated in FIG. 1, as illustrated in FIG. 3, the method may include the following.

At step 201, a first TRP set corresponding to a terminal and first configuration information of the first TRP set are determined.

The first configuration information may include measurement parameters for the terminal to measure the first reference signal and a reporting configuration for the terminal to report a first channel measurement result. The terminal may perform the first reference signal measurement based on the measurement parameters to obtain the first channel measurement result. After obtaining the first channel measurement result, the terminal may report the first channel measurement result to the network device depending on the reporting configuration.

The first configuration information may include at least one of: quasi co-location (QCL) information of the first reference signal including one or more QCL relationships, first measurement information for the first reference signal including a reference signal type, a resource configuration and a measured parameter, or a reporting configuration for the first reference signal including any one of periodic reporting, semi-periodic reporting or aperiodic reporting. It needs to be noted that the first configuration information may include other configuration parameters, which is not limited herein. In detail, the terminal may measure the first reference signal based on the measurement parameters of the first reference signal, such as the QCL information and the first measurement information, and the terminal may send the first channel measurement result to the network device based on the reporting configuration for the first reference signal after obtaining the first channel measurement result.

The QCL information of the first reference signal may include one or more QCL relationships of four QCL types, namely QCL type A, QCL type B, QCL type C and QCL type D, or may include other QCL relationships, which is not limited herein. The QCL relationship is used for determining a large-scale fading characteristic of a physical channel. Large-scale fading characteristics of the first reference signals sent by a same serving TRP to the terminal are the same, and the terminal may determine the quantity of the first reference signals sent by each TRP in the first TRP set based on the large-scale fading characteristic reflected by the QCL relationship. The type of reference signal may include a channel state information reference signal (CSI-RS), a synchronization signal block (SSB), etc., which is not limited herein. The resource configuration may be used for indicating a time domain resource position and a frequency domain resource position for the terminal in measuring the first reference signal. The measured parameter may include a reference signal receiving power (RSRP), a signal to interference plus noise ratio (SINR), a reference signal receiving quality (RSRQ), etc., which is not limited herein. The reporting configuration is used for indicating a way that the terminal reports the first channel measurement result, including one of: reporting the first channel measurement result with a reporting period of a preset time interval (i.e., periodic reporting), reporting by the terminal the first channel measurement result starting from a time point indicated by a network-side signaling with a reporting period of a preset time interval (i.e., semi-periodic reporting), or reporting by the terminal the first channel measurement result in response to a dynamic signaling indication of a network side (i.e., aperiodic reporting).

At step 202, a second TRP set corresponding to the terminal and second configuration information of the second TRP set are determined.

The second configuration information may include measurement parameters for the terminal to measure the second reference signal and a reporting configuration for the terminal to report a second channel measurement result. The terminal may perform the second reference signal measurement based on the measurement parameters to obtain the second channel measurement result. After obtaining the second channel measurement result, the terminal may report the second channel measurement result to the network device depending on the reporting configuration.

The second configuration information may include at least one of: a measurement TRP cluster identity document (ID) to which a second TRP in the second TRP set belongs, QCL information of the second reference signal including one or more QCL relationships, second measurement information for the second reference signal including a frequency point used by the measurement TRP cluster, a reference signal type, a resource configuration and a measured parameter, or a reporting configuration for the second reference signal including any one of periodic reporting, semi-periodic reporting or aperiodic reporting. It needs to be noted that the second configuration information may also include other configuration parameters, which is not limited herein. In detail, the terminal may measure the second reference signal based on the measurement parameters of the second reference signal, such as the measurement TRP cluster ID, the QCL information and the second measurement information, and the terminal may send the second channel measurement result to the network device based on the reporting configuration for the second reference signal after obtaining the second channel measurement result.

The QCL information of the second reference signal may include one or more QCL relationships of four QCL types, namely QCL type A, QCL type B, QCL type C and QCL type D, and may also include other QCL relationships, which is not limited herein. The QCL relationship is used for determining a large-scale fading characteristic of a physical channel. Large-scale fading characteristics of the second reference signals sent by a same serving TRP to the terminal are the same, and the terminal may determine the quantity of the second reference signals sent by each TRP in the second TRP set based on the large-scale fading characteristic reflected by the QCL relationship. The type of reference signal may include a channel state information reference signal (CSI-RS), a synchronization signal block (SSB), etc., which is not limited herein. The resource configuration may be used for indicating a time domain resource position and a frequency domain resource position for the terminal in measuring the second reference signal. The measured parameter may include a reference signal receiving power (RSRP), a signal to interference plus noise ratio (SINR), a reference signal receiving quality (RSRQ), etc., which is not limited herein. The reporting configuration is used for indicating a way that the terminal reports the second channel measurement result, including one of: reporting the second channel measurement result with a reporting period of a preset time interval, such as 5 ms (i.e., periodic reporting), reporting by the terminal the second channel measurement result starting from a time point indicated by a network-side signaling with a reporting period of a preset time interval (i.e., semi-periodic reporting), or reporting by the terminal the second channel measurement result in response to a dynamic signaling indication of a network side (i.e., aperiodic reporting).

At step 203, the first configuration information and the second configuration information are sent to the terminal, and the first reference signal and the second reference signal are sent to the terminal.

The first reference signal is a reference signal to be detected corresponding to the TRP(s) in the first TRP set, and the second reference signal is a reference signal to be detected corresponding to the TRP(s) in the second TRP set. In the embodiments of the disclosure, the network device may send the first configuration information and the second configuration information to the terminal, and send the first reference signal and the second reference signal, such that the terminal may measure the first reference signal based on the first configuration information to determine the channel measurement result of the TRP(s) in the first TRP set configured for the terminal and measure the second reference signal based on the second configuration information to determine the channel measurement result of the TRP(s) in the second TRP set configured for the terminal. When it is determined that a transmission state of the TRP(s) in the first TRP set to the terminal is/are poor, for example, in the case that the terminal moves causing that the TRP(s( in the first TRP set is/are far from the terminal or the channel condition between the terminal and the TRP(s) changes and does not satisfy the data transmission condition of the terminal any longer, the first TRP set may be updated based on the current serving TRP cluster or the current serving TRP cluster and the first TRP set may be updated and re-divided based on the measurement TRP cluster and the second TRP set to ensure the data transmission quality of the terminal.

At step 204, it is determined whether to update the TRP cluster and the TRP set corresponding to the terminal based on the channel measurement result(s) sent by the terminal.

The channel measurement result(s) may include the first channel measurement result and the second channel measurement result. The first channel measurement result is obtained by measuring, by the terminal, the first reference signal based on the first configuration information, and the second channel measurement result is obtained by measuring, by the terminal, the second reference signal based on the second configuration information. The TRP cluster may include the serving TRP cluster and the measurement TRP cluster, and the TRP set may include the first TRP set and the second TRP set. In a specific application scenario, before performing this step of the embodiments, the method may further include receiving the first channel measurement result and the second channel measurement result sent by the terminal.

In the embodiments of the disclosure, for the implementations, reference may be made to relevant descriptions of the embodiments in step 102, which will not be repeated herein.

In conclusion, with the method for updating a TRP according to the disclosure, the network device may send the first configuration information corresponding to the serving TRP, the second configuration information corresponding to the measurement TRP and corresponding reference signals to the terminal, such that the terminal measures the reference signals based on the first configuration information and the second configuration information to obtain the channel measurement results. The network device may update the TRP cluster and the TRP set corresponding to the terminal based on the channel measurement results sent by the terminal, such that the TRP cluster configured for the terminal may be updated as the terminal moves and the channel condition changes. In a distributed transmission process where there is no need for the terminal to perform cell handover, the network device updates the TRP cluster corresponding to the terminal and the TRPs in the updated TRP cluster are used to serve the terminal, thereby ensuring the communication quality for an edge user and meeting service requirements of the terminal for, such as, high speed and high capacity.

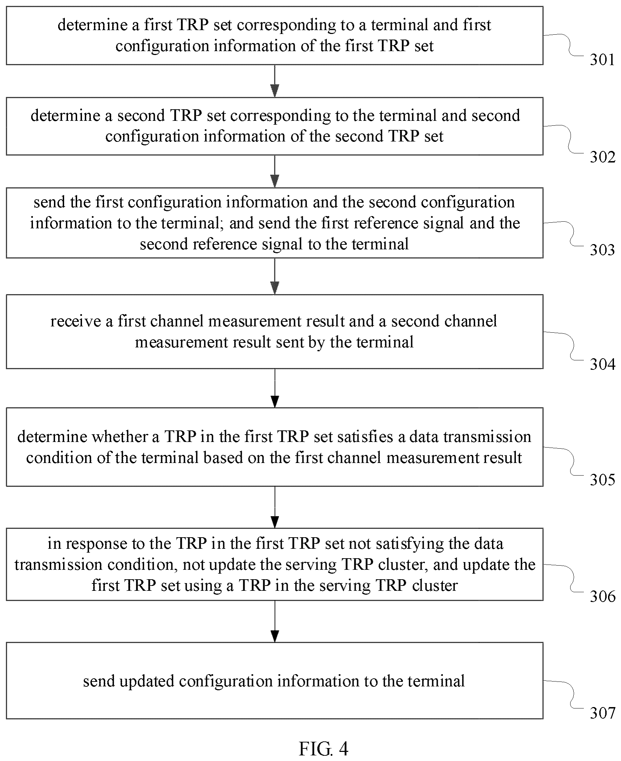

FIG. 4 is a flowchart illustrating a method for updating a TRP according to the embodiments of the disclosure. The method is performed by a network device. Based on the embodiments illustrated in FIGS. 1 and 3, as illustrated in FIG. 4, the method may include the following.

At step 301, a first TRP set corresponding to a terminal and first configuration information of the first TRP set are determined.

In the embodiments of the disclosure, for the implementation, reference may be made to relevant descriptions of the embodiments in step 201, which will not be repeated herein.

At step 302, a second TRP set corresponding to the terminal and second configuration information of the second TRP set are determined.

In the embodiments of the disclosure, for the implementation, reference may be made to relevant descriptions of the embodiments in step 202, which will not be repeated herein.

At step 303, the first configuration information and the second configuration information are sent to the terminal; and the first reference signal and the second reference signal are sent to the terminal.

In the embodiments of the disclosure, for the implementation, reference may be made to relevant descriptions of the embodiments in step 203, which will not be repeated herein.

At step 304, a first channel measurement result and a second channel measurement result sent by the terminal are received.

The first channel measurement result is a channel measurement result obtained by measuring, by the terminal based on the measurement parameters of the first reference signal in the first configuration information, the first reference signal corresponding to the TRP(s) in the first TRP set, in which the measurement parameters include the QCL information and the first measurement information of the first reference signal. The second channel measurement result is a channel measurement result obtained by measuring, by the terminal based on the measurement parameters of the second reference signal in the second configuration information, the second reference signal corresponding to the TRP(s) in the second TRP set, in which the measurement parameters include the measurement TRP cluster ID, the QCL information and the second measurement information.

At step 305, it is determined whether TRP(s) in the first TRP set satisfies/satisfy a data transmission condition of the terminal based on the first channel measurement result.

The data transmission condition of the terminal may be a condition that the TRP(s) in the first TRP set satisfies/satisfy the maximization of channel capacity or the maximization of resource utilization or a condition that a measured parameter of the terminal with respect to the reference signal for the TRP(s) of the first TRP set is less than a preset threshold, etc. The data transmission condition is not limited herein.

At step 306, in response to the TRP(s) in the first TRP set not satisfying the data transmission condition, the serving TRP cluster is not updated, and the first TRP set is updated using TRP(s) in the serving TRP cluster.

In a specific application scenario, the serving TRP cluster may include serving TRP(s) that have provided a connection service to the terminal and a candidate TRP that is to provide a connection service to the terminal. The first TRP set is a subset of the serving TRP cluster and may include all or some of the TRPs in the serving TRP cluster. In the embodiments of the disclosure, in the case that the TRP(s) in the first TRP set does/do not satisfy the data transmission condition, the first TRP set may be re-determined based on TRPs (the serving TRP(s) and the candidate TRP) included in the serving TRP cluster. For example, the serving TRP cluster includes: TRP1, TRP2, TRP3, TRP4, and TRP5. The first TRP set includes some of the TRPs in the serving TRP cluster, namely TRP1, TRP2 and TRP3. In response to determining that the first TRP set does not satisfy the data transmission condition, such as when the terminal moves and the TRPs in the first TRP set are far from the terminal or the channel condition between the terminal and the TRPs changes, the updated first TRP set that satisfies the data transmission condition may be determined based on the serving TRP cluster. For example, the updated first TRP set that satisfies the data transmission condition may include TRP3, TRP4 and TRP5. When there is a first TRP set that satisfies the data transmission condition in the serving TRP cluster, it indicates that the serving TRP cluster is able to satisfy the data transmission condition of the terminal. At this time, there is no need to update the serving TRP cluster.

Corresponding to the embodiments of the disclosure, as an implementation, in response to the TRP(s) in the first TRP set satisfying the data transmission requirement of the terminal, the serving TRP cluster, the measurement TRP cluster, the first TRP set, and the second TRP set are not updated.

At step 307, updated configuration information is sent to the terminal.

The updated configuration information includes at least one of: a serving TRP cluster ID corresponding to the first TRP set; a measurement TRP cluster ID corresponding to the second TRP set; first configuration information of the first TRP set; or second configuration information of the second TRP set.

In the embodiments of the disclosure, in the case that the serving TRP cluster is not updated and the first TRP set is updated, since the measurement TRP cluster is determined based on the serving TRP cluster, there is no need to update the measurement TRP cluster and the second TRP set. Further, after the first TRP set is updated, the updated configuration information sent to the terminal may include the first configuration information of the first TRP set.

In conclusion, with the method for updating a TRP according to the disclosure, the network device may send the first configuration information corresponding to the serving TRP and the second configuration information corresponding to the measurement TRP to the terminal, such that the terminal measures the reference signals based on the first configuration information and the second configuration information to obtain the channel measurement results. The network device may not update the serving TRP cluster corresponding to the terminal and may update the first TRP set using the TRP(s) in the serving TRP cluster to satisfy the data transmission condition of the terminal based on the channel measurement results from the terminal, thereby ensuring that the TRPs in the first TRP set may adapt to a movement of the terminal and a change in a channel condition, ensuring the communication quality for an edge user, and providing a better service for a user without cell handover.

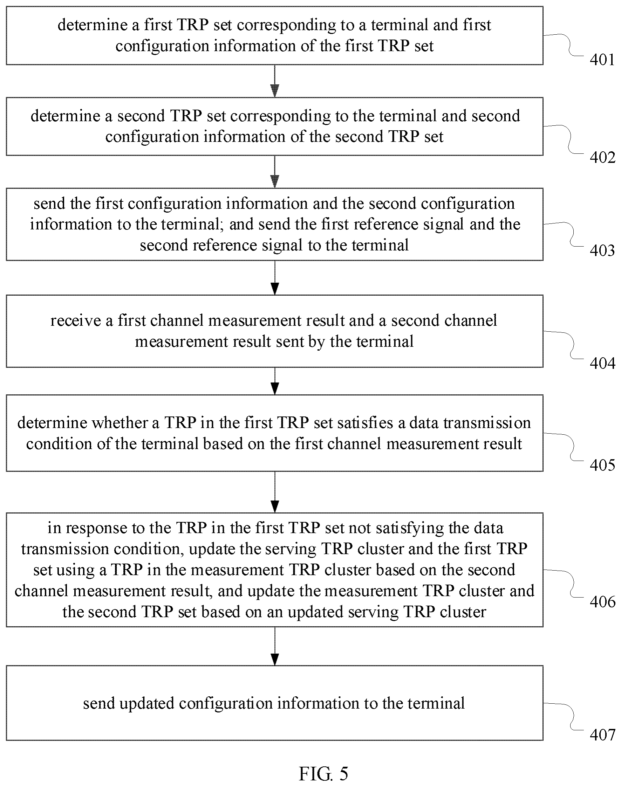

FIG. 5 is a flowchart illustrating a method for updating a TRP according to the embodiments of the disclosure. The method is performed by a network device. Based on the embodiments illustrated in FIGS. 1, 3 and 4, as illustrated in FIG. 5, the method may include the following.

At step 401, a first TRP set corresponding to a terminal and first configuration information of the first TRP set are determined.

In the embodiments of the disclosure, for the implementation, reference may be made to relevant descriptions of the embodiments in step 201, which will not be repeated herein.

At step 402, a second TRP set corresponding to the terminal and second configuration information of the second TRP set are determined.

In the embodiments of the disclosure, for the implementation, reference may be made to relevant descriptions of the embodiments in step 202, which will not be repeated herein.

At step 403, the first configuration information and the second configuration information are sent to the terminal; and the first reference signal and the second reference signal are sent to the terminal.

In the embodiments of the disclosure, for the implementation, reference may be made to relevant descriptions of the embodiments in step 203, which will not be repeated herein.

**At** step 404, a first channel measurement result and a second channel measurement result sent by the terminal are received.

At step 405, it is determined whether TRP(s) in the first TRP set satisfies/satisfy a data transmission condition of the terminal based on the first channel measurement result.

The data transmission condition of the terminal may be a condition that the TRP(s) in the first TRP set satisfies/satisfy the maximization of channel capacity or the maximization of resource utilization or a condition that a measured parameter of the terminal with respect to the reference signal for the TRP(s) of the first TRP set is less than a preset threshold, etc. The data transmission condition is not limited herein.

**At** step 406, in response to the TRP(s) in the first TRP set not satisfying the data transmission condition, the serving TRP cluster and the first TRP set are updated using TRP(s) in the measurement TRP cluster based on the second channel measurement result, and the measurement TRP cluster and the second TRP set are updated based on an updated serving TRP cluster.

In the embodiments of the disclosure, in the case of determining based on the updated first TRP set that the current serving TRP cluster cannot provide the data transmission service to the terminal after the first TRP set is updated using the current serving TRP cluster, the measurement TRP cluster and the second TRP set may be used to assist in updating the serving TRP cluster and the first TRP set. For example, the network device may replace TRP(s) in the serving TRP cluster and the first TRP set with the TRP(s) having a stronger signal transmission capability for the terminal of the measurement TRP cluster in the second TRP set based on the channel measurement result. Moreover, after the serving TRP cluster is updated, the measurement TRP cluster and the second TRP set may be updated based on the updated serving TRP cluster and the updated measurement TRP cluster, and the updated second TRP set may assist in updating the serving TRP cluster and the first TRP set subsequently. For example, the serving TRP cluster includes: TRP1, TRP2, TRP3, TRP4, and TRP5. The first TRP set includes some of the TRPs in the serving TRP cluster, namely, TRP1, TRP2 and TRP3. The measurement TRP cluster includes TRP6, TRP7 and TRP8. In response to TRP1, TRP2 and TRP3 not satisfying the data transmission condition, such as when the terminal moves and the TRPs in the first TRP set and the current serving TRP cluster are far from the terminal or the channel condition between the terminal and the TRPs changes, TRP(s) each with a better channel transmission quality for the terminal may be selected from the measurement TRP cluster adjacent to the current serving TRP cluster based on the second channel measurement result, and the TRP(s) may be used to update the serving TRP cluster and the first TRP set, such that the TRP(s) in the updated first TRP set satisfy the data transmission condition, such as the updated first TRP set that satisfies the data transmission condition includes: TRP3, TRP6 and TRP7, and the updated serving TRP cluster that satisfies the data transmission condition may include: TRP1, TRP2, TRP3, TRP4, TRP5, TRP6, and TRP7.

It needs to be noted that, in response to the TRP(s) in the first TRP set not satisfying the data transmission condition, the ways for updating the TRP cluster and the TRP set corresponding to the terminal of the embodiments in step 306 and step 406 may be combined. The updating way of the combination is not limited herein.

Corresponding to the embodiments of the disclosure, as an implementation, in response to the serving TRP(s) in the first TRP set satisfying the data transmission requirement of the terminal, the serving TRP cluster, the measurement TRP cluster, the first TRP set, and the second TRP set are not updated.

At step 407, updated configuration information is sent to the terminal.

The updated configuration information includes at least one of: a serving TRP cluster ID corresponding to the first TRP set, a measurement TRP cluster ID corresponding to the second TRP set, first configuration information of the first TRP set, or second configuration information of the second TRP set.

In the embodiments of the disclosure, when both the serving TRP cluster and the first TRP set are updated, since the measurement TRP cluster is determined based on the serving TRP cluster, it also needs to update the measurement TRP cluster and the second TRP set. Furthermore, after the first TRP set is updated, the updated configuration information sent to the terminal may include: an updated serving TRP cluster ID corresponding to the first TRP set, an updated measurement TRP cluster ID corresponding to the second TRP set, first configuration information of the first TRP set, or second configuration information of the second TRP set.

In conclusion, with the method for updating a TRP according to the disclosure, the network device may send the first configuration information corresponding to the serving TRP(s) and the second configuration information corresponding to the measurement TRP(s) to the terminal, such that the terminal measures the reference signals based on the first configuration information and the second configuration information. The network device may update the serving TRP cluster and the first TRP set using the measurement TRP(s) based on the channel measurement results from the terminal and update the measurement TRP cluster and the second TRP set based on an updated serving TRP cluster, thereby making the first TRP set configured for the terminal adapt to the movement of the terminal and the change in the channel condition, ensuring the communication quality for an edge user, and providing the better service for the user without cell handover.

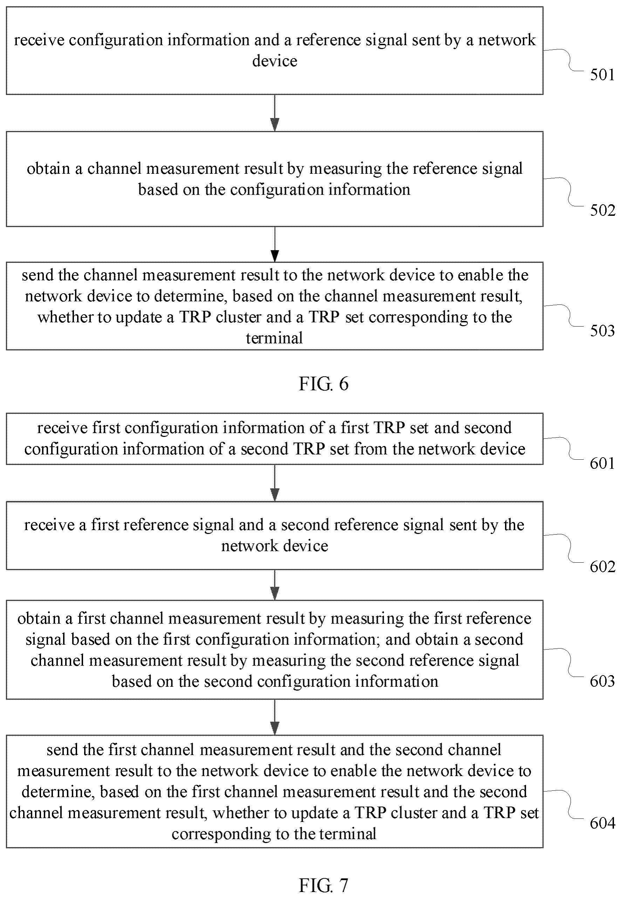

FIG. 6 is a flowchart illustrating a method for updating a TRP according to the embodiments of the disclosure. As illustrated in FIG. 6, the method is performed by a terminal and includes the following.

At step 501, configuration information and reference signal(s) sent by a network device are received.

The configuration information is used for the terminal in performing reference signal measurement(s) and reporting channel measurement result(s). The configuration information may include configuration parameters for the terminal to perform the reference signal measurement(s) and reporting configuration(s) for the terminal to report channel measurement information. The configuration parameters may include a transmission quantity of reference signals, a transmission resource, a frequency point, and a measured parameter. The reporting configuration includes any one of periodic reporting, semi-periodic reporting or aperiodic reporting.

**It** needs to be noted that the network device may simultaneously send the configuration information and the reference signal(s) to the terminal. That is, the terminal receives both the configuration information and the reference signal(s) simultaneously. Or the network device may first send the configuration information to the terminal and then send the reference signal(s). That is, the terminal receives the configuration information first and then receives the reference signal(s). In the disclosure, the sequence of receiving the configuration information and the reference signal(s) is not limited herein.

At step 502, channel measurement result(s) is/are obtained by measuring the reference signal(s) based on the configuration information.

In the embodiment of the disclosure, after receiving the configuration information and the reference signal(s) from the network device, the terminal may obtain the channel measurement result(s) by measuring the reference signal(s) based on the configuration parameters included in the configuration information. The channel measurement result is used for reflecting data transmission quality of a TRP cluster and a TRP set configured for the terminal.

At step 503, the channel measurement result(s) is/are sent to the network device to enable the network device to determine, based on the channel measurement result(s), whether to update a TRP cluster and a TRP set corresponding to the terminal.

In the embodiments of the disclosure, after the terminal obtains the channel measurement result(s) after the measuring, the terminal may send the channel measurement result(s) to the network device based on the reporting configuration(s) included in the configuration information.

The TRP cluster corresponding to the terminal may include a serving TRP cluster and a measurement TRP cluster. The TRP set corresponding to the terminal may include a first TRP set and a second TRP set. The serving TRP cluster is a TRP cluster currently providing a connection service to the terminal. The measurement TRP cluster is a TRP cluster adjacent to the serving TRP cluster. The first TRP set is a subset of the serving TRP cluster and may include all or some of the TRPs in the serving TRP cluster. The second TRP set is a subset of the measurement TRP cluster and may include all or some of the TRPs in one or more measurement TRP clusters. One TRP cluster uses the same set of system information, which realizes distributed collaborative transmission for the terminal. The measurement TRP cluster and the second TRP set may be used to assist in updating the serving TRP cluster and the first TRP set. For example, after the terminal sends the channel measurement result(s) to the network device, the network device may replace TRP(s) in the serving TRP cluster and the first TRP set with measurement TRP(s) having a stronger signal transmission capability for the terminal in the measurement TRP cluster and the second TRP set based on the channel measurement result(s).

In conclusion, with the method for updating a TRP according to the disclosure, after receiving the configuration information and the reference signal(s) sent by the network device, the terminal may perform the reference signal measurement(s) based on the configuration information and send the channel measurement result(s) to the network device, such that the network device may update the corresponding TRP cluster and the corresponding TRP set for the terminal based on the channel measurement result(s) from the terminal, thereby making the TRP cluster configured for the terminal to be updated as the terminal moves and the channel condition changes. In a distributed transmission process where there is no cell handover, the network device updates the TRP cluster corresponding to the terminal and the TRPs in the TRP cluster are used to serve the terminal, thereby ensuring the communication quality for an edge user and meeting service requirements of the terminal for, such as, high speed and high capacity.

FIG. 7 is a flowchart illustrating a method for updating a TRP according to the embodiments of the disclosure. The method is performed by a terminal. Based on the embodiments illustrated in FIG. 6, as illustrated in FIG. 7, the method may include the following.

At 601, first configuration information of a first TRP set and second configuration information of a second TRP set are received from the network device.

The first configuration information may include at least one of: QCL information of the first reference signal including one or more QCL relationships, first measurement information for the first reference signal including a reference signal type, a resource configuration and a measured parameter, or a reporting configuration for the first reference signal including any one of periodic reporting, semi-periodic reporting or aperiodic reporting. It needs to be noted that the first configuration information may include other configuration parameters, which is not limited herein.

The QCL information of the first reference signal may include one or more QCL relationships of four QCL types, namely QCL type A, QCL type B, QCL type C, and QCL type D, or may include other QCL relationships, which is not limited herein. The QCL relationship is used for determining a large-scale fading characteristic of a physical channel. Large-scale fading characteristics of the first reference signals sent by a same serving TRP to the terminal are the same, and the terminal may determine the quantity of the first reference signals sent by each TRP in the first TRP set based on the large-scale fading characteristic reflected by the QCL relationship. The type of reference signal may include a channel state information reference signal (CSI-RS), a synchronization signal block (SSB), etc., which is not limited herein. The resource configuration may be used for indicating a time domain resource position and a frequency domain resource position for the terminal in measuring the first reference signal. The measured parameter may include a reference signal receiving power (RSRP), a signal to interference plus noise ratio (SINR), a reference signal receiving quality (RSRQ), etc., which is not limited herein. The reporting configuration is used for indicating a way that the terminal reports the first channel measurement result, including one of: reporting the first channel measurement result with a reporting period of a preset time interval (i.e., periodic reporting), reporting by the terminal the first channel measurement result starting from a time point indicated by a network-side signaling with a reporting period of a preset time interval (i.e., semi-periodic reporting), or reporting by the terminal the first channel measurement result in response to a dynamic signaling indication of a network side (i.e., aperiodic reporting).

The second configuration information may include at least one of: a measurement TRP cluster ID to which a second TRP in the second TRP set belongs, QCL information of the second reference signal including one or more QCL relationships, second measurement information for the second reference signal including a frequency point used by the measurement TRP cluster, a reference signal type, a resource configuration, and a measured parameter, or a reporting configuration for the second reference signal including any one of periodic reporting, semi-periodic reporting, or aperiodic reporting.

The QCL information of the second reference signal may include one or more QCL relationships of four QCL types, namely QCL type A, QCL type B, QCL type C, and QCL type D, and may also include other QCL relationships, which is not limited herein. The QCL relationship is used for determining a large-scale fading characteristic of a physical channel. Large-scale fading characteristics of the second reference signals sent by a same serving TRP to the terminal are the same, and the terminal may determine the quantity of the second reference signals sent by each TRP in the second TRP set based on the large-scale fading characteristic reflected by the QCL relationship. The type of reference signal may include a channel state information reference signal (CSI-RS), a synchronization signal block (SSB), etc., which is not limited herein. The resource configuration may be used for indicating a time domain resource position and a frequency domain resource position for the terminal in measuring the second reference signal. The measured parameter may include a reference signal receiving power (RSRP), a signal to interference plus noise ratio (SINR), a reference signal receiving quality (RSRQ), etc., which is not limited herein. The reporting configuration is used for indicating a way that the terminal reports the second channel measurement result, including one of: reporting the second channel measurement result with a reporting period of a preset time interval, such as 5 ms (i.e., periodic reporting), reporting by the terminal the second channel measurement result starting from a time point indicated by a network-side signaling with a reporting period of a preset time interval (i.e., semi-periodic reporting), or reporting by the terminal the second channel measurement result in response to a dynamic signaling indication of a network side (i.e., aperiodic reporting).

At 602, a first reference signal and a second reference signal sent by the network device are received.

The first reference signal is a reference signal to be detected corresponding to the TRP(s) in the first TRP set, and the second reference signal is a reference signal to be detected corresponding to the TRP(s) in the second TRP set.

At 603, a first channel measurement result is obtained by measuring the first reference signal based on the first configuration information and a second channel measurement result is obtained by measuring the second reference signal based on the second configuration information.

**In** the embodiments of the disclosure, after the terminal receives the first configuration information, the second configuration information, the first reference signal and the second reference signal from the network device, the terminal may measure the first reference signal corresponding to the TRP(s) in the first TRP based on the measurement parameters of the first reference signal in the first configuration information, such as the QCL information and the first measurement information, to obtain the first channel measurement result. The terminal measures the second reference signal corresponding to the TRP(s) in the second TRP set based on the measurement parameters of the second reference signal in the second configuration information, such as the measurement TRP cluster ID of the second reference signal, the QCL information and the second measurement information, to obtain second channel measurement result. The first channel measurement result is used for reflecting the data transmission quality of the TRP(s) in the first TRP set configured for the terminal. The second channel measurement result is used for reflecting the data transmission quality of the TRP(s) in the second TRP set configured for the terminal.

At 604, the first channel measurement result and the second channel measurement result are sent to the network device to enable the network device to determine, based on the first channel measurement result and the second channel measurement result, whether to update a TRP cluster and a TRP set corresponding to the terminal.

In the embodiments of the disclosure, the terminal may send the first channel measurement result and the second channel measurement result to the network device based on the reporting ways (such as one of the periodic reporting, the semi-periodic reporting or the aperiodic reporting) indicated by the reporting configurations in the configuration information. The network device may determine whether to update the TRP cluster and the TRP set corresponding to the terminal based on the first channel measurement result and the second channel measurement result. In detail, as an implementation, in the case that the network device determines that a transmission state of the TRP(s) in the current first TRP set for the terminal is poor based on the first channel measurement result, that is, the data transmission requirement of the terminal is not satisfied, for example, when the terminal moves causing that the TRP(s) in the first TRP set is/are far from the terminal or the channel condition between the terminal and the TRP(s) changes and does not satisfy the data transmission condition of the terminal any longer, the first TRP set may be updated based on the current serving TRP cluster or the current serving TRP cluster and the first TRP set may be updated and re-divided based on the measurement TRP cluster and the second TRP set to ensure the data transmission quality of the terminal. As an implementation, in the case that the serving TRP(s) in the first TRP set satisfies/satisfy the data transmission requirement of the terminal, the serving TRP cluster, the measurement TRP cluster, the first TRP set and the second TRP set do not need to be updated.

In conclusion, with the method for updating a TRP according to the disclosure, after the terminal receives the first configuration information, the second configuration information and corresponding reference signals sent by the network device, the terminal may measure the reference signals based on the first configuration information and the second configuration information and send the channel measurement results to the network device, such that the network device may update the TRP cluster and the TRP set corresponding to the terminal based on the channel measurement results from the terminal and the TRP cluster configured for the terminal may be updated as the terminal moves and the channel condition changes. In a distributed transmission process where there is no need for the terminal to perform cell handover, the network device updates the TRP cluster corresponding to the terminal and the TRPs in the updated TRP cluster are used to serve the terminal, thereby ensuring the communication quality for an edge user and meeting service requirements of the terminal for, such as, high speed and high capacity.

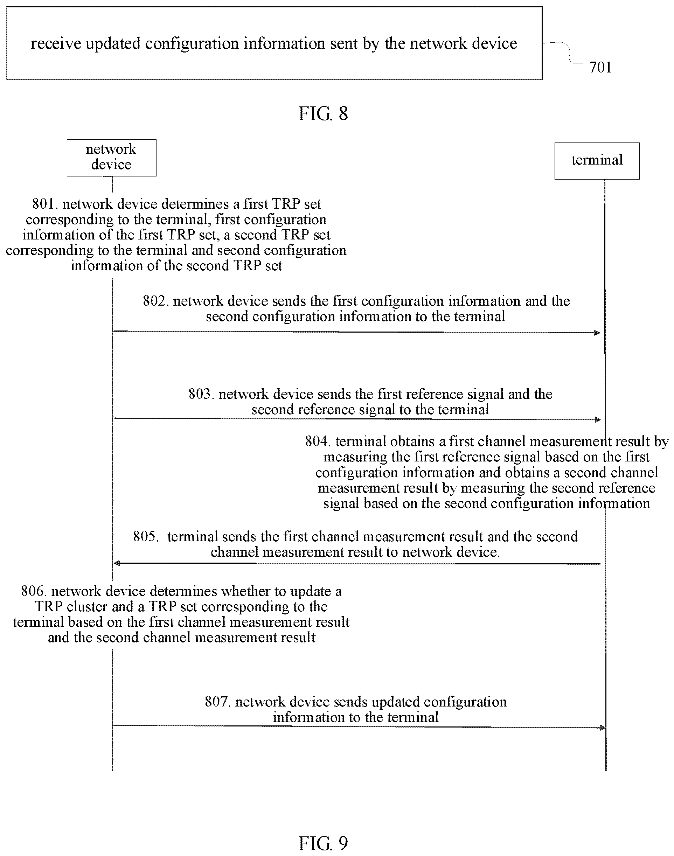

FIG. 8 is a flowchart illustrating a method for updating a TRP according to the embodiments of the disclosure. The method is performed by a terminal. Based on the embodiments illustrated in FIGS. 6 and 7, as illustrated in FIG. 8, the method may include the following.

At step 701, updated configuration information sent by the network device is received.

The updated configuration information includes at least one of: a serving TRP cluster ID corresponding to the first TRP set, a measurement TRP cluster ID corresponding to the second TRP set, first configuration information of the first TRP set, or second configuration information of the second TRP set.

In a specific application scenario, in response to the TRP(s) in the first TRP set not satisfying the data transmission condition, updating the configuration information may include two possible implementations.

In an implementation, in the case that the TRP(s) in the first TRP set does/do not satisfy the data transmission condition, the serving TRP cluster is not updated and the first TRP set is re-determined based on the serving TRP(s) included in the serving TRP cluster. Correspondingly, in the case that the serving TRP cluster is not updated and the first TRP set is updated, since the measurement TRP cluster is determined based on the serving TRP cluster, there is no need to update the measurement TRP cluster and the second TRP set either. In the embodiments of the disclosure, after the first TRP set is updated, the updated configuration information received by the terminal from the network device may include the first configuration information of the first TRP set.

In another implementation, in the case that the TRP(s) in the first TRP set does/do not satisfy the data transmission condition, both the serving TRP cluster and the first TRP set may be updated. In addition, the measurement TRP cluster and the second TRP set may be updated based on an updated serving TRP cluster to assist in updating the serving TRP cluster and the first TRP set subsequently. Correspondingly, after the first TRP set is updated, the updated configuration information sent to the terminal may include: the updated serving TRP cluster ID corresponding to the first TRP set, the updated measurement TRP cluster ID corresponding to the second TRP set, the first configuration information of the first TRP set, or the second configuration information of the second TRP set.

In conclusion, with the method for updating a TRP according to the disclosure, when the network device moves or the channel condition changes, the terminal may receive the updated configuration information sent by the network device and perform the reference signal measurements using the configuration information, such that the network device updates the corresponding TRP cluster and the corresponding TRP set based on the channel measurement results from the terminal, thereby ensuring the communication quality of the terminal and meeting the service requirements of the terminal for, such as, high speed and high capacity.

FIG. 9 is a timing diagram of a method for updating a TRP according to the embodiments of the disclosure. The method is performed by a communication system including a network device and a terminal. The network device may include TRP clusters, centralized units (CUs) and a central network (CN) in FIG. 2. In practice, the network device determines a first TRP set corresponding to the terminal and first configuration information of the first TRP set. The network device determines a second TRP set corresponding to the terminal and second configuration information of the second TRP set. The network device sends the first configuration information and the second configuration information to the terminal. The network device sends the first reference signal and the second reference signal to the terminal. The terminal measures the first reference signal based on first measurement configuration information to obtain a first channel measurement result and measures the second reference signal based on second measurement configuration information to obtain a second channel measurement result. The terminal sends the first channel measurement result and the second channel measurement result to the network device. The network device determines whether to update the TRP cluster and the TRP set corresponding to the terminal based on the first channel measurement result and the second channel measurement result.

At step 801, the network device determines the first TRP set corresponding to the terminal and the first configuration information of the first TRP set and determines the second TRP set corresponding to the terminal and the second configuration information of the second TRP set.

The first configuration information is used for the terminal in performing the first reference signal measurement and reporting the first channel measurement result. The first reference signal is used by the terminal to perform a channel measurement on TRP(s) in the first TRP set to obtain the first channel measurement result. The first configuration information is further used for the terminal in performing the second reference signal measurement and reporting the second channel measurement result. The second reference signal is used by the terminal to perform a channel measurement on TRP(s) in the second TRP set to obtain the second channel measurement result.

The first configuration information may include at least one of: QCL information of the first reference signal, in which the QCL information includes one or more QCL relationships, first measurement information for the first reference signal, in which the first measurement information includes a reference signal type, a resource configuration and a measured parameter, or a reporting configuration for the first reference signal, in which the reporting configuration includes any one of periodic reporting, semi-periodic reporting or aperiodic reporting. The second configuration information may include at least one of: a measurement TRP cluster ID to which a second TRP in the second TRP set belongs, QCL information of the second reference signal, in which the QCL information includes one or more QCL relationships, second measurement information for the second reference signal, in which the second measurement information includes a frequency point, a reference signal type, a resource configuration and a measured parameter, or a reporting configuration for the second reference signal, in which the reporting configuration includes any one of periodic reporting, semi-periodic reporting or aperiodic reporting. For implementations, reference may be made to relevant descriptions of the implementations in step 201 and step 202, which will not be repeated herein. It needs to be noted that the first configuration information and the second configuration information may also include other configuration parameters, which will not be limited herein.

At step 802, the network device sends the first configuration information and the second configuration information to the terminal.

At step 803, the network device sends the first reference signal and the second reference signal to the terminal.

The first reference signal is a reference signal to be detected corresponding to the TRP(s) in the first TRP set. The second reference signal is a reference signal to be detected corresponding to the TRP(s) in the second TRP set. In the embodiments of the disclosure, the network device may send the first configuration information, the second configuration information, the first reference signal and the second reference signal to the terminal, such that the terminal may measure the first reference signal based on the first configuration information to determine the data transmission quality of the TRP(s) in the first TRP set configured for the terminal, and the terminal may measure the second reference signal based on the second configuration information to determine the data transmission quality of the TRP(s) in the second TRP set configured for the terminal.

It needs to be noted that the network device may send the configuration information and the reference signals to the terminal simultaneously or send the configuration information to the terminal first and then send the reference signals. In the disclosure, a sequence of sending the configuration information and the reference signals is not limited herein.

At step 804, the terminal obtains a first channel measurement result by measuring the first reference signal based on the first configuration information and obtains a second channel measurement result by measuring the second reference signal based on the second configuration information.

In the embodiments of the disclosure, after the terminal receives the first configuration information, the second configuration information, the first reference signal and the second reference signal from the network device, the terminal may measure the first reference signal corresponding to the TRP(s) in the first TRP set based on the measurement parameters of the first reference signal in the first configuration information, such as the QCL information and the first measurement information, to obtain the first channel measurement result; and the terminal may measure the second reference signal corresponding to the TRP(s) in the second TRP set based on the measurement parameters of the second reference signal in the second configuration information, such as measurement TRP cluster ID, the QCL information and the second measurement information, to obtain the second channel measurement result. The first channel measurement result is used for reflecting the data transmission quality of the TRP(s) in the first TRP set configured for the terminal. The second channel measurement result is used for reflecting the data transmission quality of the TRP(s) in the second TRP set configured for the terminal.

At step 805, the terminal sends the first channel measurement result and the second channel measurement result to the network device.

In the embodiments of the disclosure, the terminal may send the first channel measurement result and the second channel measurement result to the network device based on the reporting ways (such as one of the periodic reporting, the semi-periodic reporting or the aperiodic reporting) indicated by the reporting configurations in the configuration information.

At step 806, the network device determines whether to update the TRP cluster and the TRP set corresponding to the terminal based on the first channel measurement result and the second channel measurement result.

In the embodiments of the disclosure, the network device may determine whether to update the TRP cluster and the TRP set corresponding to the terminal based on the first channel measurement result and the second channel measurement result. In detail, as an implementation, when the network device determines that a transmission state of the TRP(s) in the current first TRP set for the terminal is poor based on the first channel measurement result, that is, the data transmission requirement of the terminal is not satisfied, for example, when the terminal moves causing that the TRP(s) in the first TRP set is/are far from the terminal or the channel condition between the terminal and the TRP(s) changes and does not satisfy the data transmission condition of the terminal any longer, the first TRP set may be updated based on the current serving TRP cluster, or the current serving TRP cluster and the first TRP set may be updated and re-divided based on the measurement TRP cluster and the second TRP set to ensure the data transmission quality of the terminal. As another implementation, in the case that the serving TRP(s) in the first TRP set satisfies/satisfy the data transmission requirement of the terminal, the serving TRP cluster, the measurement TRP cluster, the first TRP set and the second TRP set do not need to be updated.

At step 807, the network device sends updated configuration information to the terminal.

The updated configuration information includes at least one of: a serving TRP cluster ID corresponding to the first TRP set, a measurement TRP cluster ID corresponding to the second TRP set, first configuration information of the first TRP set, or second configuration information of the second TRP set.

In a specific application scenario, in response to the TRP(s) in the first TRP set not satisfying the data transmission condition, updating the configuration information may include following three implementations.

In an implementation, in the case that the TRP(s) in the first TRP set does/do not satisfy the data transmission condition, the serving TRP cluster is not updated and the first TRP set is re-determined based on the TRP(s) included in the serving TRP cluster. Correspondingly, in the case that the serving TRP cluster is not updated and the first TRP set is updated, since the measurement TRP cluster is determined based on the serving TRP cluster, there is no need to update the measurement TRP cluster and the second TRP set either. In the embodiments of the disclosure, after the first TRP set is updated, the updated configuration information sent by the network device may include the first configuration information of the first TRP set.

In another implementation, in the case that the TRP(s) in the first TRP set does/do not satisfy the data transmission condition, both the serving TRP cluster and the first TRP set may be updated. In addition, the measurement TRP cluster and the second TRP set may be updated based on an updated serving TRP cluster and the updated measurement TRP cluster and the second TRP set are used to assist in updating the serving TRP cluster and the first TRP set subsequently. Correspondingly, after the first TRP set is updated, the updated configuration information sent by the network device to the terminal may include: the updated serving TRP cluster ID corresponding to the first TRP set, the updated measurement TRP cluster ID corresponding to the second TRP set, the first configuration information of the first TRP set, or the second configuration information of the second TRP set.

In still another implementation, in the case that the TRP(s) in the first TRP set does/do not satisfy the data transmission condition, the above two implementations may be combined. The updating way of the combination is not limited herein.

In conclusion, with the method for updating a TRP according to the disclosure, the network device may send the configuration information and the reference signals to the terminal, such that the terminal may obtain the channel measurement results by measuring the reference signals based on the configuration information. The network device may update the corresponding TRP cluster and the corresponding TRP set for the terminal based on the channel measurement results from the terminal, such that the TRP cluster and the TRP set configured for the terminal may be updated as the terminal moves and the channel condition changes, and the data transmission requirement of the terminal may always be satisfied. In a distributed transmission process where there is no cell handover, the network device updates the TRP cluster corresponding to the terminal and the TRPs in the updated TRP cluster are used to serve the terminal, thereby ensuring the communication quality for an edge user and meeting service requirements of the terminal for, such as, high speed and high capacity.

In the embodiments of the disclosure, the methods according to the embodiments of the disclosure have been described from perspectives of the network device and the terminal, respectively. To perform functions of the methods according to the above embodiments, the network device and the terminal may include a hardware structure and a software module, and realize the above functions with the hardware structure, the software module, or a combination of the hardware structure and the software module. A specific function may be performed as the hardware structure, the software module, or the hardware structure plus the software module.

Corresponding to the methods for updating a TRP in above several embodiments, the disclosure also provides apparatuses for updating a TRP. Since the apparatuses for updating a TRP in the embodiments of the disclosure correspond to the methods for updating a TRP in the above several embodiments, the embodiments of the methods for updating a TRP are also applied to the apparatuses for updating a TRP in the embodiments, which are not described in detail in the embodiments.

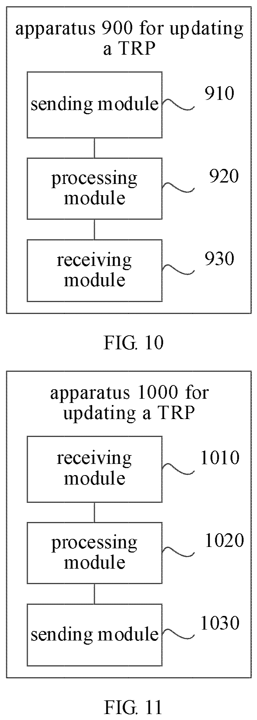

FIG. 10 is a block diagram illustrating an apparatus 900 for updating a TRP according to the embodiments of the disclosure. The apparatus 900 for updating a TRP may be applied to a network device.

As illustrated in FIG. 10, the apparatus 900 may include the following.

A sending module 910 is configured to send configuration information and reference signal(s) to a terminal. The configuration information is used for the terminal in measuring the reference signals(s) to obtain channel measurement result(s).

A processing module 920 is configured to determine whether to update a TRP cluster and a TRP set corresponding to the terminal based on the channel measurement result(s) sent by the terminal.

In some embodiments of the disclosure, the processing module 920 is further configured to determine the TRP set corresponding to the terminal, in which the TRP set includes a first TRP set and a second TRP set. The first TRP set includes one or more TRPs in a serving TRP cluster. The serving TRP cluster is a TRP cluster currently providing a connection service to the terminal. The second TRP set includes one or more TRPs in a measurement TRP cluster. The measurement TRP cluster is a TRP cluster adjacent to the serving TRP cluster. The processing module 920 is further configured to determine configuration information of the TRP set corresponding to the terminal, in which the configuration information includes first configuration information and second configuration information. The first configuration information is used for the terminal in performing a first reference signal measurement of the first TRP set. The second configuration information is used for the terminal in performing a second reference signal measurement of the second TRP set.

In some embodiments of the disclosure, the first configuration information includes at least one of: QCL information of the first reference signal, in which the QCL information includes one or more QCL relationships, first measurement information for the first reference signal, in which the first measurement information includes a reference signal type, a resource configuration and a measured parameter, or a reporting configuration for the first reference signal, in which the reporting configuration includes any one of periodic reporting, semi-periodic reporting or aperiodic reporting.

In some embodiments of the disclosure, the second configuration information includes at least one of: a measurement TRP cluster ID to which a second TRP in the second TRP set belongs; QCL information of the second reference signal, in which the QCL information includes one or more QCL relationships; second measurement information for the second reference signal, in which the second measurement information includes a frequency point, a reference signal type, a resource configuration and a measured parameter; or a reporting configuration for the second reference signal, in which the reporting configuration includes any one of periodic reporting, semi-periodic reporting or aperiodic reporting.

In some embodiments of the disclosure, the sending module 910 is further configured to send the first configuration information and the second configuration information to the terminal and send the first reference signal and the second reference signal to the terminal.

In some embodiments of the disclosure, the configuration information further includes reporting configuration(s) of the channel measurement result(s). The channel measurement result(s) includes a first channel measurement result and a second channel measurement result. As illustrated in FIG. 10, the apparatus 900 further includes a receiving module 930.

The receiving module 930 is configured to receive the first channel measurement result and the second channel measurement result sent by the terminal based on the reporting configuration(s), in which the first channel measurement result is obtained by measuring, by the terminal, the first reference signal based on the first configuration information, and the second channel measurement result is obtained by measuring, by the terminal, the second reference signal based on the second configuration information.

In some embodiments of the disclosure, the processing module 920 is configured to determine whether TRP(s) in the first TRP set satisfies/satisfy a data transmission condition of the terminal based on the first channel measurement result; in response to the TRP(s) in the first TRP set not satisfying the data transmission condition, not update the serving TRP cluster and update the first TRP set using TRP(s) in the serving TRP cluster; and/or in response to the TRP(s) in the first TRP set not satisfying the data transmission condition, update the serving TRP cluster and the first TRP set using TRP(s) in the measurement TRP cluster based on the second channel measurement result, and update the measurement TRP cluster and the second TRP set based on an updated serving TRP cluster.

In some embodiments of the disclosure, in response to the TRP(s) in the first TRP set not satisfying the data transmission condition, the sending module 910 is further configured to send updated configuration information to the terminal, in which the updated configuration information includes at least one of: a serving TRP cluster ID corresponding to the first TRP set, a measurement TRP cluster ID corresponding to the second TRP set, first configuration information of the first TRP set, or second configuration information of the second TRP set.

In some embodiments of the disclosure, the processing module 920 is configured to: in response to the TRP(s) in the first TRP set satisfying the data transmission requirement of the terminal, not update the serving TRP cluster, the measurement TRP cluster, the first TRP set, and the second TRP set.

FIG. 11 is a block diagram illustrating an apparatus 1000 for updating a TRP according to the embodiments of the disclosure. The apparatus 1000 for updating a TRP may be applied to a terminal.

As illustrated in in FIG. 11, the apparatus 1000 may include the following.

A receiving module 1010 is configured to receive configuration information and reference signal(s) sent by a network device.

A processing module 1020 is configured to obtain channel measurement result(s) by measuring the reference signal(s) based on the configuration information.

A sending module 1030 is configured to send the channel measurement result(s) to the network device to enable the network device to determine, based on the channel measurement result(s), whether to update a TRP cluster and a TRP set corresponding to the terminal.

In some embodiments of the disclosure, the configuration information includes the first configuration information and the second configuration information. The first configuration information is used for the terminal in measuring the first reference signal of the first TRP set, and the second configuration information is used for the terminal in measuring the second reference signal of the second TRP set. The first TRP set includes one or more TRPs in the serving TRP cluster. The serving TRP cluster is the TRP cluster currently providing the connection service to the terminal. The second TRP set includes one or more TRPs in the measurement TRP cluster. The measurement TRP cluster is the TRP cluster adjacent to the serving TRP cluster.

In some embodiments of the disclosure, the first configuration information includes at least one of: QCL information of the first reference signal, in which the QCL information includes one or more QCL relationships, first measurement information for the first reference signal, in which the first measurement information includes a reference signal type, a resource configuration and a measured parameter, or a reporting configuration for the first reference signal, in which the reporting configuration includes any one of periodic reporting, semi-periodic reporting or aperiodic reporting.

In some embodiments of the disclosure, the second configuration information includes at least one of: a measurement TRP cluster ID to which a second TRP in the second TRP set belongs, QCL information of the second reference signal, in which the QCL information includes one or more QCL relationships, second measurement information for the second reference signal, in which the second measurement information includes a frequency point, a reference signal type, a resource configuration and a measured parameter, or a reporting configuration for the second reference signal, in which the reporting configuration includes any one of periodic reporting, semi-periodic reporting or aperiodic reporting.

In some embodiments of the disclosure, the processing module 1020 is configured to: obtain a first channel measurement result by measuring the first reference signal based on the first configuration information and obtain a second channel measurement result by measuring the second reference signal based on the second configuration information.

In some embodiments of the disclosure, the configuration information further includes reporting configuration(s) of the channel measurement result(s). The sending module 1030 is configured to send the first channel measurement result and the second channel measurement result to the network device based on the reporting configuration(s).

In some embodiments of the disclosure, the method further includes: receiving updated configuration information sent by the network device, in which the updated configuration information includes at least one of: a serving TRP cluster ID corresponding to the first TRP set, a measurement TRP cluster ID corresponding to the second TRP set, first configuration information of the first TRP set, or second configuration information of the second TRP set.

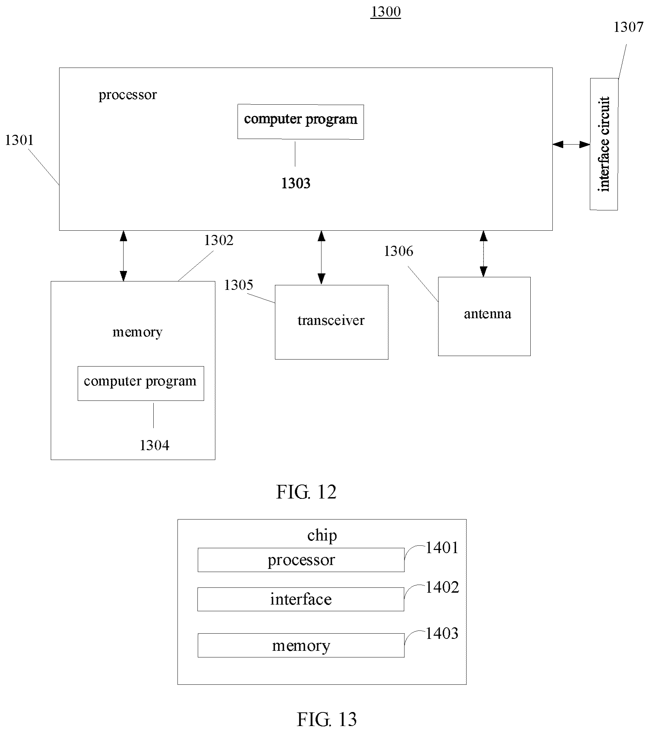

FIG. 12 is a block diagram illustrating a communication device 1300 according to the embodiments of the disclosure. The communication device 1300 may be a network device, a user equipment, or a chip, a chip system, or a processor that supports the network device to implement above methods, or a chip, a chip system, or a processor that supports the user equipment to implement above methods. The communication device may be used to implement the methods in method embodiments, and specific details may be referred to a description in above method embodiments.

The communication device 1300 may include one or more processors 1301. The processor 1301 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

In some examples, the communication device 1300 may also include one or more memories 1302 for storing the computer program 1304. When the processor 1301 executes the computer program 1304, the communication device 1300 is caused to implement the method in the above method embodiments. Optionally, the memory 1302 may also store data. The communication device 1300 and the memory 1302 may be set up separately or integrated together.

In some examples, the communication device 1300 may also include a transceiver 1305 and an antenna 1306. The transceiver 1305 may be called a transceiver unit, a transceiver machine, or a transceiver circuit, etc., to perform the receiving and sending function. The transceiver 1305 may include a receiver and a transmitter, and the receiver may be called a receiving machine or a receiving circuit, etc. to realize the receiving function; and the transmitter may be called a transmitting machine or a transmitting circuit, etc. to realize the sending function.

In some examples, the communication device 1300 may also include one or more interface circuits 1307. The interface circuit 1307 is used to receive code instructions and transmit the code instructions to the processor 1301. The processor 1301 runs the code instructions to cause the communication device 1300 to implement the method in the above method embodiments.

In one implementation, the processor 1301 may include a transceiver for performing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1301 may store a computer program 1303. When the computer program 1303 is running on the processor 1301, the communication device 1300 is caused to implement the method in the above method embodiments. The computer program 1303 may be solidified in the processor 1301, in which case the processor 1301 may be implemented in hardware.

In an implementation, the communication device 1300 may include circuits. The circuits may implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal, but the scope of the communication device in the disclosure is not limited thereto, and the structure of the terminal may not be limited by FIG. 12. The communication device may be a stand-alone device or may be part of a larger device. For example, the communication device may be:
(1) a stand-alone IC, a chip, a chip system or a subsystem;
(2) a collection of ICs including one or more ICs. Optionally, the collection of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and so on; and
(6) others.

For the case where the communication device may be a chip or a chip system, please see the structural diagram of a chip in FIG. 13. The chip illustrated in FIG. 13 includes a processor 1401 and an interface 1402. There may be one or more processors 1401, and there may be one or more interfaces 1402.

In some examples, the chip also includes a memory 1403, which is used to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation may not be understood as beyond the scope of protection of embodiments of the disclosure.

The disclosure also provides a readable storage medium for storing instructions. When the instructions are executed by a computer, a function of any one of the above method embodiments is implemented.

The disclosure also provides a computer program product. When the computer program product is executed by a computer, a function of any one of the above method embodiments is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable of accessing or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

With the methods and apparatuses for updating a TRP according to the disclosure, problems of poor communication quality for an edge user and frequent cell handover in existing multi-node cooperative network architecture may be solved.

Based on the disclosure, an example of a specific solution is as follows.

### 1. At the network side

### 1. Determining two measurement TRP sets

TRP set 1: all or part of the TRPs in the serving TRP cluster.

TRP set 2: all or part of the TRPs in one or more measurement TRP clusters.

The serving TRP cluster is a TRP cluster currently providing a connection service to the terminal. The measurement TRP cluster is another TRP cluster adjacent to the serving TRP cluster. The measurement TRP clusters use the same set of system information, broadcast channels, etc.

2. Determining a measurement reference signal configuration for the TRP set 1. The configuration parameters include at least one of: QCL information of the reference signal, a measurement configuration for the reference signal, or a reporting configuration.

The QCL information includes one or more QCL relationships. The measurement configuration for the reference signal may include a reference signal type (SSB/CSI-RS), a resource configuration for the reference signal, and a measured parameter (RSRP/SINR/RSRQ...). The reporting configuration may include periodic reporting, semi-periodic reporting or aperiodic reporting (a dynamic signaling indication).

3. Determining the measurement reference signal configuration of the TRP set 2. The configuration parameters include at least one of: a TRP cluster ID to which TRP belongs, QCL information of the reference signal, a measurement configuration of the reference signal for the TRP, or a reporting configuration.

The QCL information includes one or more QCL relationships. The measurement configuration of the reference signal includes a frequency point, a reference signal type (SSB/CSI-RS), a resource configuration for the reference signal and a measured parameter (RSRP/SINR/RSRQ...). The reporting configuration may include periodic reporting, semi-periodic reporting or aperiodic reporting (a dynamic signaling indication).

4. Sending the configuration information for the reference signal.

5. TRPs in the TRP set 1 and the TRP set 2 sending reference signals, respectively.

6. Receiving measurement results reported by the UE, updating the TRPs included in the TRP cluster 1 and the TRP set 2 based on the measurement results, and indicating the configuration information to the terminal. The configuration information includes at least one of: an updated TRP cluster ID and its corresponding configuration information. The configuration information includes at least one of: a serving cluster ID, a measurement cluster ID, or updated configuration information for the reference signal of the TRP set 1 and the TRP set 2, for the configuration information, reference may be made to above steps 2 and 3.

### II. At the terminal side

1. Receiving configuration information from a network side.
2. Receiving reference signals of TRPs in TRP clusters, performing channel quality assessment, and completing reporting based on a network configuration.

In conclusion, the disclosure has the following beneficial technical effects. The TRP cluster and the TRP set configured for the terminal may be updated as the terminal moves and the channel condition changes. In a distributed transmission process, there is no need for the terminal to perform cell handover and a plurality of TRPs serve one terminal, thereby ensuring the communication quality for an edge user and meeting the service requirements of the terminal for, such as, high speed and high capacity.

Those skilled in the art may understand that the first, second, and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "multiple" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine readable medium" and "computer readable medium" refer to any computer program product, device, and/or apparatus (e.g., a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal used to provide the machine instructions and/or data to the programmable processor.

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

It may be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

In addition, it may be understood that each of various embodiments of the disclosure may be implemented independently, or may be combined with other embodiments as permitted by the solution.

Those skilled in the art may realize that the units and algorithmic steps of the various examples described in combination with embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for updating a transmission reception point (TRP), performed by a network device, the method comprising:
sending configuration information and a reference signal to a terminal, wherein the configuration information is used for the terminal to obtain a channel measurement result by measuring the reference signal; and
determining whether to update a TRP cluster and a TRP set corresponding to the terminal based on the channel measurement result sent by the terminal.

2. The method of claim 1, before sending the configuration information and the reference signal to the terminal, further comprising at least one of:
determining the TRP set corresponding to the terminal, wherein the TRP set comprises a first TRP set and a second TRP set, the first TRP set comprises one or more TRPs in a serving TRP cluster, the serving TRP cluster is a TRP cluster currently providing a connection service to the terminal, the second TRP set comprises one or more TRPs in a measurement TRP cluster, and the measurement TRP cluster is a TRP cluster adjacent to the serving TRP cluster; or
determining configuration information of the TRP set corresponding to the terminal, wherein the configuration information comprises first configuration information and second configuration information, the first configuration information is used for the terminal to measure a first reference signal of the first TRP set, and the second configuration information is used for the terminal to measure a second reference signal of the second TRP set.

3. The method of claim 2, wherein the first configuration information comprises at least one of:
quasi co-location (QCL) information of the first reference signal, wherein the QCL information comprises one or more QCL relationships;
first measurement information for the first reference signal, wherein the first measurement information comprises a reference signal type, a resource configuration and a measured parameter; or
a reporting configuration for the first reference signal, wherein the reporting configuration comprises any one of periodic reporting, semi-periodic reporting or aperiodic reporting.

4. The method of claim 2, wherein the second configuration information comprises at least one of:
a measurement TRP cluster identity document (ID) to which a second TRP in the second TRP set belongs;
QCL information of the second reference signal, wherein the QCL information comprises one or more QCL relationships;
second measurement information for the second reference signal, wherein the second measurement information comprises a frequency point, a reference signal type, a resource configuration, and a measured parameter; or
a reporting configuration for the second reference signal, wherein the reporting configuration comprises any one of periodic reporting, semi-periodic reporting or aperiodic reporting.

5. The method of claim 2, wherein sending the configuration information and the reference signal to the terminal comprises:
sending the first configuration information and the second configuration information to the terminal; and
sending the first reference signal and the second reference signal to the terminal.

6. The method of claim 2, wherein the configuration information further comprises a reporting configuration of the channel measurement result, the channel measurement result comprises a first channel measurement result and a second channel measurement result, and the method further comprises:
receiving the first channel measurement result and the second channel measurement result, sent by the terminal based on the reporting configuration, wherein the first channel measurement result is obtained by measuring, by the terminal, the first reference signal based on the first configuration information, and the second channel measurement result is obtained by measuring, by the terminal, the second reference signal based on the second configuration information.

7. The method of claim 6, wherein determining whether to update the TRP cluster and the TRP set corresponding to the terminal based on the channel measurement result sent by the terminal comprises:
determining whether a TRP in the first TRP set satisfies a data transmission condition of the terminal based on the first channel measurement result;
in response to the TRP in the first TRP set not satisfying the data transmission condition, not updating the serving TRP cluster, and updating the first TRP set using a TRP in the serving TRP cluster; and/or
in response to the TRP in the first TRP set not satisfying the data transmission condition, updating the serving TRP cluster and the first TRP set using a TRP in the measurement TRP cluster based on the second channel measurement result, and updating the measurement TRP cluster and the second TRP set based on an updated serving TRP cluster.

8. The method of claim 7, in response to the TRP in the first TRP set not satisfying the data transmission condition, the method further comprising:
sending updated configuration information to the terminal, wherein the updated configuration information comprises at least one of:
a serving TRP cluster ID corresponding to the first TRP set;
a measurement TRP cluster ID corresponding to the second TRP set;
first configuration information of the first TRP set; or
second configuration information of the second TRP set.

9. The method of claim 7, wherein determining whether to update the TRP cluster and the TRP set corresponding to the terminal based on the channel measurement result sent by the terminal comprises:
in response to the TRP in the first TRP set satisfying the data transmission requirement of the terminal, not updating the serving TRP cluster, the measurement TRP cluster, the first TRP set, and the second TRP set.

10. A method for updating a transmission reception point (TRP), performed by a terminal, the method comprising:
receiving configuration information and a reference signal sent by a network device;
obtaining a channel measurement result by measuring the reference signal based on the configuration information; and
sending the channel measurement result to the network device to enable the network device to determine, based on the channel measurement result, whether to update a TRP cluster and a TRP set corresponding to the terminal.

11. The method of claim 10, wherein the configuration information comprises first configuration information and second configuration information, the first configuration information is used for the terminal to measure a first reference signal of a first TRP set, and the second configuration information is used for the terminal to measure a second reference signal of a second TRP set, wherein the first TRP set comprises one or more serving TRPs in a serving TRP cluster, the serving TRP cluster is a TRP cluster currently providing a connection service to the terminal, the second TRP set comprises one or more measurement TRPs in a measurement TRP cluster, and the measurement TRP cluster is a TRP cluster adjacent to the serving TRP cluster.

12. The method of claim 11, wherein the first configuration information comprises at least one of:
quasi co-location (QCL) information of the first reference signal, wherein the QCL information comprises one or more QCL relationships;
first measurement information for the first reference signal, wherein the first measurement information comprises a reference signal type, a resource configuration and a measured parameter; or
a reporting configuration for the first reference signal, wherein the reporting configuration comprises any one of periodic reporting, semi-periodic reporting or aperiodic reporting.

13. The method of claim 11, wherein the second configuration information comprises at least one of:
a measurement TRP cluster identity document (ID) to which a second TRP in the second TRP set belongs;
QCL information of the second reference signal, wherein the QCL information comprises one or more QCL relationships;
second measurement information for the second reference signal, wherein the second measurement information comprises a frequency point, a reference signal type, a resource configuration, and a measured parameter; or
a reporting configuration for the second reference signal, wherein the reporting configuration comprises any one of periodic reporting, semi-periodic reporting or aperiodic reporting.

14. The method of claim 11, wherein obtaining the channel measurement result by measuring the reference signal based on the configuration information comprises:
obtaining a first channel measurement result by measuring the first reference signal based on the first configuration information; and
obtaining a second channel measurement result by measuring the second reference signal based on the second configuration information.

15. The method of claim 14, wherein the configuration information further comprises a reporting configuration of the channel measurement result, and sending the channel measurement result to the network device comprises:
sending the first channel measurement result and the second channel measurement result to the network device based on the reporting configuration.

16. The method of claim 10, further comprising:
receiving updated configuration information sent by the network device, wherein the updated configuration information comprises at least one of:
a serving TRP cluster ID corresponding to the first TRP set;
a measurement TRP cluster ID corresponding to the second TRP set;
first configuration information of the first TRP set; or
second configuration information of the second TRP set.

17. A apparatus for updating a transmission reception point (TRP), performed by a network device, comprising:
a sending module, configured to send configuration information and a reference signal to a terminal, wherein the configuration information is used for the terminal to obtain a channel measurement result by measuring the reference signal; and
a processing module, configured to determine whether to update a TRP cluster and a TRP set corresponding to the terminal based on the channel measurement result sent by the terminal.

18. An apparatus for updating a transmission reception point (TRP), performed by a terminal, comprising:
a receiving module, configured to receive configuration information and a reference signal sent by a network device;
a processing module, configured to obtain a channel measurement result by measuring the reference signal based on the configuration information; and
a sending module, configured to send the channel measurement result to the network device to enable the network device to determine, based on the channel measurement result, whether to update a TRP cluster and a TRP set corresponding to the terminal.

19. A communication device, comprising:
a transceiver;
a memory; and
a processor, connected to the transceiver and the memory, and configured to control wireless signal transmission and reception of the transceiver by executing computer-executable instructions on the memory and to implement the method of any one of claims 1 to 16.

20. A computer storage medium for storing computer-executable instructions, wherein when the computer-executable instructions are executed by a processor, the method of any one of claims 1 to 16 is implemented.

21. A communication system, comprising a network device and a terminal, wherein
the network device is configured to implement the method of any one of claims 1 to 9; and the terminal is configured to implement the method of any one of claims 10 to 16.
